# EUROPEAN PATENT SPECIFICATION

(11) **EP 1 965 670 B1**
(45) Date of publication and mention of the grant of the patent: **20.03.2013**
(21) Application number: 06829613.6
(22) Date of filing: 07.12.2006
(51) Int. Cl.: A23L 1/40, A23L 1/00

(54) **PACKAGED CONCENTRATE FOR PREPARING A BOUILLON, SOUP, SAUCE, GRAVY OR FOR USE AS A SEASONING, THE CONCENTRATE COMPRISING GELATIN AND STARCH**
VERPACKTES KONZENTRAT ZUR HERSTELLUNG EINER BOUILLON, SUPPE, SAUCE, BRATENSAUCE ODER ALS WÜRZE, WOBEI DAS KONZENTRAT GELATINE UND STÄRKE ENTHÄLT
CONCENTRÉ POUR PRÉPARER DU BOUILLON, SOUPE, SOUCE OU POUR ÊTRE UTILISÉ COMME CONDIMENT

(30) Priority: 12.12.2005 EP 05077842; 07.06.2006 EP 06115093
(43) Date of publication of application: 10.09.2008
(73) Proprietor: Unilever N.V., 3013 AL Rotterdam (NL); Unilever PLC, London EC4Y 0DY (GB)
(72) Inventor: ACHTERKAMP, Georg, GERMANY 74074 Heilbronn (DE); ACKERMANN, Dieter, Kurt, Karl, 74074 Heilbronn (DE); INOUE, Chiharu, NL-3133 AT Vlaardingen (NL); KOHLUS, Reinhard, 74074 Heilbronn (DE); KUHN, Matthias, 74074 Heilbronn (DE)
(74) Representative: Reijns, Tiemen Geert Pieter
(86) International application number: PCT/EP2006/012060
(87) International publication number: WO 2007/068483

(56) References cited:
- EP-A- 1 468 615
- WO-A-97/48290
- FR-A- 1 169 862
- US-A- 3 786 159
- US-A- 4 140 809
- US-A- 4 929 456
- US-A- 5 013 573
- US-A- 5 332 585
- US-A- 5 593 716
- US-A- 5 855 939
- US-A- 6 086 937
- US-A1- 2003 044 503

## Description

### Field of the invention

The present invention relates to concentrates for preparing a bouillon, broth, soup, sauce, gravy or for use as a seasoning. More in particular, the invention relates to such concentrates in the form of a jelly.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon", or "bouillon concentrates".

Conventionally, bouillon concentrates comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

The most common physical formats in which such concentrates are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid concentrates for bouillons, soups, sauces etcetera do also exist. They have the advantage that e.g. liquid extracts or concentrates of herbs, vegetables, meat etcetera can be included.

There is a desire for concentrates for preparing a bouillon, broth, soup, sauce, gravy, or for use as seasoning, which combine some advantages of liquid concentrates with some advantages of dry concentrates.

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

US2003/0044503 relates to a composite food having a gelling agent, and a flavouring and/or texturing component. The composite food product is substantially solid and self-sustaining at ambient temperature.

US200310044503 further relates to a method for preparing a flavoured ₂ndlor textured food item for service by providing a servable portion of an optionally cooked food item, removing a servable portion of the self-sustainable food product from the food product, contacting the servable food portion with the servable food item portion to form a flavoured and/or textured food item combination, normally arranged with the product on top of the food item, and optionally heating the flavoured and/or textured food item combination to prepare the food item for service. The examples show a garlic butter, a barbeque composition and cheddar cheese. This document does not relate to a concentrated product with a high salt content.

US-A-6 086 937 relates to a composition, preferably fat continuous, of a scoopable or spoonable consistency for the preparation of sauces. A gel is not disclosed and this document is silent about a relatively high salt content.

US-A-4 929 456 relates to a process for preparing a melting tolerant portion controlled sauce and seasoning particulate. A gel has not been disclosed and this document is silent about a high salt content.

FR 1169862 and WO97/48290 disclose soup concentrates that do not have the appearance of a sel.

### Summary of the invention

There is a need for packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 30 g would dissolve in 900 ml boiling water in less than 3.5 minutes, preferably less than 3 minutes). It is also preferred that such jelly has a low tendency to syneresis (water separation) and is preferably an elastic, not too rigid gel (as such will facilitate removal from its packaging; elastic and not too rigid can best be judged by hand-feel). Also it is desired that such gel is easy to be manufactured (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1-50 (i.e. allows for high salt levels in the gel). Also, the product should be fairly stable in transport and storage, which is normally at ambient temperatures, but during which temperatures can rise substantially higher. Preferably, the gel should also have a certain strenghth: preferably the strength should be such that the force (in gram) necessary for a plunger to penetrate 10 mm in a gel is above 50, preferably above 70 g. Also low to no phase separation is desired.

It has now been found that such may be achieved (at least in part) by a packaged concentrate for preparing a bouillon, broth, soup, sauce, gravy or for use as a seasoning as in claim 1, (preferably judged when taken out of the packaging).

Water (as amount) is herein to be understood as the total amount of moisture present. The concentration of salt is to be calculated as (amount of salt) / (amount of salt + total moisture). The same is true for other dissolved matter, such as gelling system (amount gelling system) / (amount gelling system + total moisture).

With "herbs, vegetables, fruits, meat, fish, crustaceans, or particulates thereof' (in connection to the preferred absence of 0.5-60% by weight as stated above) is meant particles having a size such that they are at least visible to the naked eye, in the product as consumed, e.g. upon dillution with water in the required dillution rate (as that is when the particulates or herbs etcetera matter: to be seen just prior to consumption). Thus, "meat powder" as known in the bouillon industry can be difficult to be seen in the jelly cube (e.g. due to the concentration, possible turbidity following certain ingredients), but such conventional meat powder particulates are well visible to the naked eye in the soup or bouillon when prepared in the proper dillution. The packaged concentrates according to this invention do not comprise 0.5-60% of such "herbs, vegetables, fruits, meat, fish, crustaceans, or particulates thereof" according to the definition given just above.

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). More preferably, the packaged concentrate according to the invention (when taken out of the packaging) has the appearance or rheology of a gel as expressed by a ratio of elastic modulus G' : viscous modulus G" of at least 1, preferably at least 3, more preferably at least 5. It can furthermore be preferred that the viscous modulus G" is at least 10 Pa, preferably at least 50 Pa. The method of measuring such is described below.

### Detailed description of the invention

In the formulation as set out above, it can be preferred that the concentrate comprises 20-30% (weight % based on water content of concentrate) salt, even more preferably the concentrate according to the present invention comprises 20-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable. The upper limit of solubility in water of NaCl is around 26% (at room temperature), and hence above this limit some salt crystals may occur. Hence, the amount of salt is preferably (just) below this salt saturation concentration level.

The concentrates are more or less shape stable: it is not an easily flowable product, but it being a gelled product means it can deform (easily) under pressure. By choosing the amount and ratio of gelatin and starch the desired rheology can be obtained.

The amount and ratio of starch and gelatin as required will e.g. depend on the amount of salt in the formulation, and such amounts and ratio can be determined by the person of average skill in the art of gelled food products without undue burden. At high salt levels, e.g. above 15%, it is difficult if not impossible to get gels with the desired properties (in terms of e.g. dissolution speed, syneresis, and gel strength) by using starch or gelatin on their own. It was found that in combination such is possible. Preferred amounts will be:
starch: 1-7%, more prefeferably: 3-6%
gelatin: 6-20%, more preferably 12-20%.
both as wt% on the amount of water as defined above.
The gelatin used is preferably 125-275 Bloom gelatin, more preferably 150-260 Bloom gelatin, even more preferably 160-240 Bloom gelatin. The starch used is preferably native starch, and also is preferably potato starch or corn starch.

In the concentrates according to the invention, it is preferred that the taste-imparting components comprise one or more of liquid or dissolvable, extracts or concentrates of one or more of meat, fish, herbs, fruit or vegetables, and/or flavours, and/or yeast extract, and/or hydrolysed protein of vegetable-, soy-, fish-, or meat origin. In the above, where it says "meat" this is to be understood to comprise beef, pork, chicken (and other fowl). Preferably the amount of taste-imparting components as set out above is 1-40% (by weight on the total packed concentrate).

The packaged concentrate according to the present invention may further comprising 0.5 to 30% (weight on total concentrate) of a taste enhancer selected from the group of monosodium glutamate, 5'-ribotides, organic acids, or mixtures thereof. It may also be preferred that the packaged concentrate according to the present invention further comprises 1-30%, preferably 1-15% (weight on total packaged concentrate) of emulsified or dispersed oil and/or fat. Salt can also be seen as a taste enhancer, but is herein regarded as a separate category of ingredients.

For the packaged concentrate according to the present invention, it is preferred that the total moisture content of the concentrate is 20-60% by weight (based on the total packed concentrate), preferably 40-60% by weight (based on the total packed concentrate). Also, it is preferred that the packaged concentrate according to the invention has a water activity a_{w} of 0.4 to 0.87, preferably 0.5-0.82, more preferably 0.7-0.78, most preferably 0.7-0.75. Preferably, the pH of the concentrate is between 5 and 9, preferably 5-7.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature.

The packaged concentrates according to the present invention are preferably translucent or transparent. This can also make it attractive to choose e.g. packaging which is at least partially transparent.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 80°C. Also, it is preferred that the temperature of the mixture during the filling is at least 70°C. When fat is used solid at room temperature, it is preferably melted first before adding to other components.

By manufacturing the packaged concentrates according to the present invention, e.g. by the process as set out above, it was found that concentrates for preparing a bouillon, broth, soup, sauce, gravy or for use as a seasoning could be obtained that are in gel form, are quickly dispersible/dissolvable (e.g. 30 g in less than 3.5 minutes preferably in less than 3 minutes, when immersed in 900 ml boiling water), are non-sticky, show a low tendency to syneresis, and can be made in such a way that they can be used in the dillution rates usual for bouillon concentrates (e.g. 1:20-1:50).

Typical shapes in which the product according to the invention may be made comprise shapes such as is in the form of a cube, tablet, pellet, ball, briquette, dragee, cone, truncated cone, or in the shape of (the profile or projection or portrait of) an animal or part thereof (e.g. animal head). Due to the formulation and the subsequent manner of manufacturing, complex shapes are possible.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1g-10 kg, preferably 2-250 g, more preferably 10-50 g. The portion of the concentrate according to the present invention as packaged is preferably such that the concentrate has a weight excluding packaging) of 1g-10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

In the formulation as set out above the concentrate comprises 15-30% (weight % based on water content of concentrate) salt, more preferably the concentrate according to the present invention comprises 15-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable.

The invention further relates to the use of a concentrate as set out above, for preparing a bouillon, broth, soup, sauce, gravy or for use as a seasoning. This may be done by diluting with an aqueous liquid (e.g. water) under application of heat, in e.g. a ratio of 1:15 - 1: 100, preferably 1:20 - 1:70, more preferably 1:20 - 1:50.

The packaged concentrates described herein are preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners.
As used herein, "sweetness index" is a term used to describe the level of sweetness of the dosage form relative to sucrose. Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995".
It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The texture or rheology desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 1 is suitable. It is preferred, however, that said ratio is greater than 3, more preferably it is greater than 5.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1%.
This set of parameters refers to a standard oscillatory test conducted with a standard state of the art low deformation rheometer as commercially available from e.g. Bohlin or TA Instruments.

The requirements as stated herein for G' : G" should preferably apply to the whole concentrate, and not just for a part of it. Also, it is preferred that the concentrate does not consist of a solid envelope material covering core. It can also be preferred that the concentrate is translucent and/or transparent.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

The invention further relates to the use of the concentrate according to the present invention and as set out above for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

### Examples

### Example 1a

A dry mix was prepared comprising:
Pork fat, 690 g
Salt, 580 g
Pork meat powder, 530 g
Sugar, 200 g
MSG, 120g
Pork flavour (dissolvable powder), 60 g

The above mixture was made in a gel with 2300 g water, 450 g gelatin 160 Bloom, 110 g potato starch. This gel (at 20% salt on water) had a gel strength of approx. 240 g (measured with the method below for model systems) and dissolved in less than 100 seconds (30 g gel immersed in 900 g boiling water).

### Processing:

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into containers, followed by sealing and leaving to cool to room temperature

### Example 1 b

The same dry mix as under 1 a was now gelled with 2300 g water, 450 g gelatin 160 Bloom and 110 g corn starch. This gel (at 20% salt on water) had a gel strength of approx. 260 g (measured with the method below for model systems) and dissolved in less than 100 seconds (30 g gel immersed in 900 g boiling water).

### Example 1c

The same dry mix as under 1a was now gelled with 2300 g water, 450 g gelatin 240 Bloom and 110 g corn starch. This gel (at 20% salt on water) had a gel strength of approx. 350 g (measured with the method below for model systems) and dissolved in less than 100 seconds (30 g gel immersed in 900 g boiling water).

### Example 1d

The same dry mix as under 1a was now gelled with 2300 g water, 450 g gelatin 240 Bloom and 110 g potato starch. This gel (at 20% salt on water) had a gel strength of approx. 300 g (measured with the method below for model systems) and dissolved in less than 100 seconds (30 g gel immersed in 900 g boiling water).

All examples 1 a-1 d had no to very low syneresis.

Although these examples refer to products that contain 0.5-60% particulates that can be seen by the naked eye, which is not preferred in the present case, it is submitted that such particles in the present examples do not substantially alter properties like G', G", water activity, dissolving time, dillution rates, gel strength and syneresis.

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers have an influence on results if not very large. Therefore the choosen container should always be the same. We have used plastic containers for model systems (diameter bottom 5.5 cm; diameter top 6.5 cm; height 8.5 cm) and glass jars for process trials with recipes other than model systems (diameter 7 cm; height 4 cm).
- After preparation, samples have been stored at ambient conditions (21°C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

## Claims

1. Packaged concentrate for preparing a bouillon, broth, soup, sauce, gravy or for use as a seasoning, said concentrate comprising:
- 20-80% water (weight % based on total packaged concentrate),
- a gelling system comprising the combination of starch in an amount of 0.1 % to 10% (weight % based on water content of concentrate, preferably 1-7%, more preferably 3-6%) and gelatin in an amount of 1.5-30% (weight % based on water content of concentrate, preferably 6-20%, more preferably 12-20%), whereby the concentration ofgelling system is to be calculated as (amount of gelling system) / (amount of gelling system + total moisture),
- 15-30% (weight % based on water content of concentrate, preferably 15-26%) of salt, whereby the concentration of salt is to be calculated as (amount of salt) / (amount of salt + total moisture),
- 0.5-60% (weight % based on the total composition) of taste imparting components, in the absence of 0.5-60% by weight of herbs, vegetables, fruits, meat, fish, crustaceans, or particulates thereof (weight % based on total packaged concentrate), and wherein the concentrate has the appearance of a gel.

2. Packaged concentrate according to claim 1, wherein the concentrate has the rheology of a gel.

3. Packaged concentrate according to claim 1-2, wherein the concentrate has the appearance or rheology of a gel as expressed by a ratio of elastic modulus G' : viscous modulus G" of at least 1, preferably at least 3, more preferably at least 5.

4. Packaged concentrate according to claim 1-3, wherein viscous modulus G" is at least 10 Pa, preferably at least 50 Pa.

5. Packaged concentrate according to claim 1-4, wherein the gelatin used is 125-275 Bloom gelatin, preferably 150-260 Bloom gelatin.

6. Concentrate according to claim 1-5, wherein the starch is native starch.

7. Concentrate according to claim 1-6, wherein the starch is potato starch or corn starch.

8. Packaged concentrate according to claim 1-7, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin.

9. Packaged concentrate according to claim 1-8, wherein the total moisture content of the concentrate is 40-60% by weight (based on the total packed concentrate).

10. Packaged concentrate according to claim 1-9, wherein the concentrate has a water activity a_{w} of 0.5 to 0.87, preferably 0.7-0.78.

11. Packaged concentrate according to claim 1-10, further comprising 1-30%, preferably 1-15% (weight on total packaged concentrate) of emulsified oil and/or fat.

12. Packaged concentrate according to claim 1-11, wherein the concentrate is packaged in a cup or tub with a seal.

13. Concentrate according to claim 1-12, wherein the portion of the concentrate as packaged is such that the concentrate has a weight (excluding packaging) of 10g-10 kg.

14. Concentrate according to claim 1-13, wherein the concentrate provides a bouillon, broth, soup, sauce, gravy by diluting said concentrate with an aqueous liquid under application of heat, preferably in a ratio of 1:15 - 1: 50.

15. Concentrate according to claim 1-14, whereby 30 g of the concentrate dissolves in 900 ml boiling water in less than 3.5 minutes, preferably less than 3 minutes.

16. Concentrate according to claim 1-15, wherein the concentrate is a concentrated bouillon.

17. Concentrate according to claim 16, wherein the concentrated bouillon provides a bouillon by diluting said concentrated bouillon with an aqueous liquid under application of heat, said concentrated bouillon comprising:
- 20-80% water (weight % based on total packaged concentrate),
- a gelling system comprising the combination of starch in an amount of 1-7% (weight % based on water content of concentrate, more preferably 3-6%) and gelatin in an amount of 6-20% (weight % based on water content of concentrate, more preferably 12-20%) whereby the concentration of gelling system is to be calculated as (amount of gelling system) / (amount of gelling system + total moisture),
- 15-30% (weight % based on water content of concentrate, preferably 15-26%) of salt, whereby the concentration of salt is to be calculated as (amount of salt) / (amount of salt + total moisture).
- 0.5-60% (weight % based on the total composition) of taste imparting components, in the absence of 0.5-60% by weight of herbs, vegetables, fruits, meat, fish, crustaceans, or particulates thereof (weight % based on total packaged concentrate),
and wherein the concentrate has the appearance of a gel, as expressed by a ratio of elastic modulus G' : viscous modulus G" of at least 1, and wherein the portion of the concentrate as packaged is such that the concentrate has a weight (excluding packaging) of 10g-10 kg.

18. Concentrate according to claim 17 further comprising 1-30%, preferably 1-15% (weight on total packaged concentrate) of emulsified oil and/or fat.

19. Concentrate according to claim 17 or 18, wherein the concentrated bouillon provides a bouillon by diluting said concentrated bouillon with an aqueous liquid under application of heat in a ratio of 1:15 - 1: 50.

20. Process for preparing a concentrate for preparing a bouillon, broth, soup, sauce, gravy or for use as a seasoning, said concentrate comprising:
- 20-80% water (weight % based on total packaged concentrate),
- a gelling system comprising the combination of starch in an amount of 0.1% to 10% (weight % based on water content of concentrate, preferably 1-7%, more preferably 3-6%) and gelatin in an amount of 1.5-30% (weight % based on water content of concentrate, preferably 6-20%, more preferably 12-20%), whereby the concentration of gelling system is to be calculated as (amount of gelling system) / (amount of gelling system + total moisture),
- 15-30% (weight % based on water content of concentrate, preferably 15-26%) of salt, whereby the concentration of salt is to be calculated as (amount of salt) / (amount of salt + total moisture),
- 0.5-60% (weight % based on the total composition) of taste imparting components, in the absence of 0.5-60% by weight of herbs, vegetables, fruits, meat, fish, crustaceans, or particulates thereof (weight % based on total packaged concentrate), and wherein the concentrate has the appearance of a gel, the process comprising the steps of mixing all ingredients, filling the mixture into the packaging or moulds, closing the packaging, whereby a heating step is applied prior to, and/or during and/or after filling into the packaging or moulds.

21. Process according to claim 20, wherein at least part of the heating stage is to a temperature of at least 70°C.

22. Use of a concentrate according to claim 1-19, for preparing a bouillon, broth, soup, sauce, gravy or for use as a seasoning.

23. Use according to claim 22, wherein the concentrate is a concentrated bouillon and provides a bouillon by diluting said concentrated bouillon with an aqueous liquid under application of heat, said concentrated bouillon comprising:
- 20-80% water (weight % based on total packaged concentrate),
- a gelling system comprising the combination of starch in an amount of 1-7% (weight % based on water content of concentrate, more preferably 3-6%) and gelatin in an amount of 6-20% (weight % based on water content of concentrate, more preferably 12-20%), whereby the concentration of gelling system is to be calculated as (amount of gelling system) / (amount of gelling system + total moisture),
- 15-30% (weight % based on water content of concentrate, preferably 15-26%) of salt, whereby the concentration of salt is to be calculated as (amount of salt) / (amount of salt + total moisture),
- 0.5-60% (weight % based on the total composition) of taste imparting components, in the absence of 0.5-60% by weight of herbs, vegetables, fruits, meat, fish, crustaceans, or particulates thereof (weight % based on total packaged concentrate), and wherein the concentrate has the appearance of a gel, as expressed by a ratio of elastic modulus G': viscous modulus G" of at least 1,
and wherein the portion of the concentrate as packaged is such that the concentrate has a weight (excluding packaging) of 10g- 250g.

24. Use according to claim 23 wherein the concentrated bouillon further comprises 1-30%, preferably 1-15% (weight on total packaged concentrate) of emulsified oil and/or fat.

25. Use according to claim 23 or 24, wherein the concentrated bouillon provides a bouillon by diluting said concentrated bouillon with an aqueous liquid under application of heat in a ratio of 1:15 - 1: 50.

26. Method for preparing a bouillon comprising the step of diluting a concentrate according to any one of claims 1 to 19 whereby said concentrate is diluted with an aqueous liquid under application of heat.

27. Method according to claim 26 whereby said concentrate is diluted in a ratio of 1: 15 - 1: 50.

## Patentansprüche

1. Abgepacktes Konzentrat zur Herstellung einer Bouillon, einer Brühe, einer Suppe, einer Soße, eines Bratensafts oder zur Verwendung als Würze, wobei das Konzentrat umfasst:
- 20 bis 80 % Wasser (Gew.-%, bezogen auf das gesamte abgepackte Konzentrat),
- ein Geliersystem, das die Kombination von Stärke in einer Menge von 0,1 % bis 10 % (Gew.-%, bezogen auf den Wassergehalt des Konzentrats, vorzugsweise 1-7 %, bevorzugter 3-6 %) und Gelatine in einer Menge von 1,5-30 % (Gew.-%, bezogen auf den Wassergehalt des Konzentrats, vorzugsweise 6-20 %, bevorzugter 12-20%), wobei die Konzentration des Geliersystems als (Menge an Geliersystem) / (Menge an Geliersystem + Gesamtfeuchtigkeit) zu berechnen ist,
- 15-30 % (Gew.-%, bezogen auf den Wassergehalt des Konzentrats, vorzugsweise 15-26 %) Salz, wobei die Konzentration an Salz als (Menge an Salz) / (Menge an Salz plus Gesamtfeuchtigkeit) zu berechnen ist,
- 0,5-60 % (Gew.-%, bezogen auf die gesamte Zusammensetzung) an Geschmack verleihenden Komponenten,
in Abwesenheit von 0,5 bis 60 Gew.-% Kräutern, Gemüse, Früchten, Fleisch, Fisch, Krustazeen oder partikelförmigen Materialien davon (Gew.-%, bezogen auf das gesamte abgepackte Konzentrat,) und wobei das Konzentrat das Aussehen eines Gels hat.

2. Abgepacktes Konzentrat gemäß Anspruch 1, wobei das Konzentrat die Rheologie eines Gels hat.

3. Abgepacktes Konzentrat gemäß Anspruch 1-2, wobei das Konzentrat das Aussehen oder die Rheologie eines Gels hat, wie es durch ein Verhältnis elastischer Modul G' : viskoser Modul G" von wenigstens 1, vorzugsweise wenigstens 3, bevorzugter wenigstens 5, ausgedrückt wird.

4. Abgepacktes Konzentrat gemäß Anspruch 1-3, wobei der viskose Modul G" wenigstens 10 Pa, vorzugsweise wenigstens 50 Pa, ist.

5. Abgepacktes Konzentrat gemäß Anspruch 1-4, wobei die verwendete Gelatine 125-275 Bloom-Gelatine, vorzugsweise 150-260 Bloom-Gelatine ist.

6. Konzentrat gemäß Anspruch 1-5, wobei die Stärke native Stärke ist.

7. Konzentrat gemäß Anspruch 1-6, wobei die Stärke Kartoffelstärke oder Maisstärke ist.

8. Abgepacktes Konzentrat gemäß Anspruch 1-7, wobei die den Geschmack verbessernden Komponenten ein(en) oder mehrere von flüssigen oder löslichen Extrakten oder Konzentraten von einem oder mehreren von Fleisch, Fisch, Kräutern, Früchten oder Gemüse und/oder Aromamittel und/oder Hefeextrakt und/oder hydrolysiertem Protein mit vegetabiler, Soja-, Fisch- oder Fleisch-Herkunft umfassen.

9. Abgepacktes Konzentrat gemäß Anspruch 1-8, wobei der Gesamtfeuchtigkeitsgehalt des Konzentrats 40-60 Gew.-% (bezogen auf das gesamte abgepackte Konzentrat) ist.

10. Abgepacktes Konzentrat gemäß Anspruch 1-9, wobei das Konzentrat eine Wasseraktivität a_{w} von 0,5 bis 0,87, vorzugsweise von 0,7-0,78, hat.

11. Abgepacktes Konzentrat gemäß Anspruch 1-10, das außerdem 1-30 %, vorzugsweise 1-15 % (Gew.-%, bezogen auf das gesamte abgepackte Konzentrat) an emulgiertem Öl und/oder Fett umfasst.

12. Abgepacktes Konzentrat gemäß Anspruch 1-11, wobei das Konzentrat in einem Becher oder einem Bottich mit einer Versiegelung abgepackt ist.

13. Konzentrat gemäß Anspruch 1-12, wobei die Portion des Konzentrats, wie sie abgepackt ist, so ist, dass das Konzentrat ein Gewicht (ausschließlich Verpackung) von 10 g bis 10 kg hat.

14. Konzentrat gemäß Anspruch 1-13, wobei das Konzentrat eine Bouillon, eine Brühe, eine Suppe, eine Soße, einen Bratensaft durch Verdünnen des Konzentrats mit einer wässrigen Flüssigkeit unter Anwendung von Wärme, vorzugsweise in einem Verhältnis von 1:15 bis 1:50, bereitstellt.

15. Konzentrat gemäß Anspruch 1-14, wobei sich 30 g des Konzentrats in 900 ml siedendem Wasser in weniger als 3,5 Minuten, vorzugsweise weniger als 3 Minuten, lösen.

16. Konzentrat gemäß Anspruch 1-15, wobei das Konzentrat eine konzentrierte Bouillon ist.

17. Konzentrat gemäß Anspruch 16, wobei die konzentrierte Bouillon eine Bouillon durch Verdünnen der konzentrierten Bouillon mit einer wässrigen Flüssigkeit unter Anwendung von Wärme bereitstellt, wobei die konzentrierte Bouillon umfasst:
- 20 bis 80 % Wasser (Gew.-%, bezogen auf das gesamte abgepackte Konzentrat),
- ein Geliersystem, das die Kombination von Stärke in einer Menge von 1 % bis 17 % (Gew.-%, bezogen auf den Wassergehalt des Konzentrats, bevorzugter 3-6 %) und Gelatine in einer Menge von 6-20 % (Gew.-%, bezogen auf den Wassergehalt des Konzentrats, bevorzugter 12-20%), wobei die Konzentration des Geliersystems als (Menge an Geliersystem) / (Menge an Geliersystem + Gesamtfeuchtigkeit) zu berechnen ist,
- 15-30 % (Gew.-%, bezogen auf den Wassergehalt des Konzentrats, vorzugsweise 15-26 %) Salz, wobei die Konzentration an Salz als (Menge an Salz) / (Menge an Salz plus Gesamtfeuchtigkeit) zu berechnen ist,
- 0,5-60 % (Gew.-%, bezogen auf die gesamte Zusammensetzung) an Geschmack verleihenden Komponenten,
in Abwesenheit von 0,5 bis 60 Gew.-% Kräutern, Gemüse, Früchten, Fleisch, Fisch, Krustazeen oder partikelförmigen Materialien davon (Gew.-%, bezogen auf das gesamte abgepackte Konzentrat) und wobei das Konzentrat das Aussehen eines Gels hat, wie es durch ein Verhältnis elastischer Modul G' : viskoser Modul G" von wenigstens 1 ausgedrückt wird, und wobei die Portion des Konzentrats, wie sie abgepackt ist, so ist, dass das Konzentrat ein Gewicht (ausschließlich Verpackung) von 10 g bis 10 kg hat.

18. Konzentrat gemäß Anspruch 17, das außerdem 1-30 %, vorzugsweise 1-15 % (Gew.-%, bezogen auf das abgepackte Konzentrat) emulgiertes Öl und/oder Fett umfasst.

19. Konzentrat gemäß Anspruch 17 oder 18, wobei die konzentrierte Bouillon eine Bouillon durch Verdünnen der konzentrierten Bouillon mit einer wässrigen Flüssigkeit unter Anwendung von Wärme in einem Verhältnis von 1:15 bis 1:50 bereitstellt.

20. Verfahren zur Herstellung eines Konzentrats zur Herstellung einer Bouillon, einer Brühe, einer Suppe, einer Soße, eines Bratensafts oder zur Verwendung als Würze, wobei das Konzentrat umfasst:
- 20 bis 80 % Wasser (Gew.-%, bezogen auf das gesamte abgepackte Konzentrat),
- ein Geliersystem, das die Kombination von Stärke in einer Menge von 0,1 % bis 10 % (Gew.-%, bezogen auf den Wassergehalt des Konzentrats, vorzugsweise 1-7 %, bevorzugter 3-6 %) und Gelatine in einer Menge von 1,5-30 % (Gew.-%, bezogen auf den Wassergehalt des Konzentrats, vorzugsweise 6-20 %, bevorzugter 12-20%), wobei die Konzentration des Geliersystems als (Menge an Geliersystem) / (Menge an Geliersystem + Gesamtfeuchtigkeit) zu berechnen ist,
- 15-30 % (Gew.-%, bezogen auf den Wassergehalt des Konzentrats, vorzugsweise 15-26 %) Salz, wobei die Konzentration an Salz als (Menge an Salz) /(Menge an Salz plus Gesamtfeuchtigkeit) zu berechnen ist,
- 0,5-60 % (Gew.-%, bezogen auf die gesamte Zusammensetzung) an Geschmack verleihenden Komponenten,
in Abwesenheit von 0,5 bis 60 Gew.-% Kräutern, Gemüse, Früchten, Fleisch, Fisch, Krustazeen oder partikelförmigen Materialien davon (Gew.-%, bezogen auf das gesamte abgepackte Konzentrat) und wobei das Konzentrat das Aussehen eines Gels hat, wobei das Verfahren die Schritte Mischen aller Ingredienzien, Füllen des Gemisches in die Verpackung oder Formen, Schließen der Verpackung umfasst, wobei ein Erwärmungsschritt vor und/oder während und/oder nach Füllen in die Verpackung oder Formen angewendet wird.

21. Verfahren gemäß Anspruch 20, wobei wenigstens ein Teil des Erwärmungsschritts auf eine Temperatur von wenigstens 70 °C ist.

22. Verwendung eines Konzentrats gemäß Anspruch 1-19 zur Herstellung einer Bouillon, einer Brühe, einer Suppe, einer Soße, eines Bratensafts oder zur Verwendung als Würze.

23. Verwendung gemäß Anspruch 22, wobei das Konzentrat eine konzentrierte Bouillon ist und eine Bouillon durch Verdünnen der konzentrierten Bouillon mit einer wässrigen Flüssigkeit unter Anwendung von Wärme bereitstellt, wobei die konzentrierte Bouillon umfasst:
- 20 bis 80 % Wasser (Gew.-%, bezogen auf das gesamte abgepackte Konzentrat),
- ein Geliersystem, das die Kombination von Stärke in einer Menge von 1-7 % (Gew.-%, bezogen auf den Wassergehalt des Konzentrats, bevorzugter 3-6 %) und Gelatine in einer Menge von 6-20 % (Gew.-%, bezogen auf den Wassergehalt des Konzentrats, bevorzugter 12-20%), wobei die Konzentration des Geliersystems als (Menge an Geliersystem) / (Menge an Geliersystem + Gesamtfeuchtigkeit) zu berechnen ist,
- 15-30 % (Gew.-%, bezogen auf den Wassergehalt des Konzentrats, vorzugsweise 15-26 %) Salz, wobei die Konzentration an Salz als (Menge an Salz) /(Menge an Salz plus Gesamtfeuchtigkeit) zu berechnen ist,
- 0,5-60 % (Gew.-%, bezogen auf die gesamte Zusammensetzung) an Geschmack verleihenden Komponenten,
in Abwesenheit von 0,5 bis 60 Gew.-% Kräutern, Gemüse, Früchten, Fleisch, Fisch, Krustazeen oder partikelförmigen Materialien davon (Gew.-%, bezogen auf das gesamte abgepackte Konzentrat) und wobei das Konzentrat das Aussehen eines Gels hat, wie es durch ein Verhältnis elastischer Modul G' : viskoser Modul G" von wenigstens 1 ausgedrückt wird, und wobei die Portion des Konzentrats, wie sie abgepackt **ist,** so ist, dass das Konzentrat ein Gewicht (ausschließlich Verpackung) von 10 g bis 250 g hat.

24. Verwendung gemäß Anspruch 23, wobei die konzentrierte Bouillon außerdem 1-30 %, vorzugsweise 1-15 % (Gewicht, bezogen auf das gesamte abgepackte Konzentrat) emulgiertes Öl und/oder Fett umfasst.

25. Verwendung gemäß Anspruch 23 oder 24, wobei die konzentrierte Bouillon durch Verdünnen der konzentrierten Bouillon mit einer wässrigen Flüssigkeit unter Anwendung von Wärme in einem Verhältnis von 1:15 bis 1:50 eine Bouillon bereitstellt.

26. Verfahren zur Herstellung einer Bouillon, das den Schritt des Verdünnens eines Konzentrats gemäß einem der Ansprüche 1 bis 19 umfasst, wobei das Konzentrat mit einer wässrigen Flüssigkeit unter Anwendung von Wärme verdünnt wird.

27. Verfahren gemäß Anspruch 26, wobei das Konzentrat in einem Verhältnis von 1:15 bis 1:50 verdünnt wird.

## Revendications

1. Concentré conditionné pour préparer un bouillon, un potage, une soupe, une sauce, une sauce à base de jus de viande ou pour être utilisé comme assaisonnement, ledit concentré comprenant :
- de 20 à 80 % d'eau (% en poids sur la base du concentré conditionné total),
- un système de gélification comprenant la combinaison d'amidon en une quantité de 0,1 % à 10 % (% en poids sur la base de la teneur en eau du concentré, de préférence de 1 à 7 %, plus préférablement de 3 à 6 %) et de la gélatine en une quantité de 1,5 à 30 % (% en poids sur la base de la teneur en eau du concentré, de préférence de 6 à 20 %, plus préférablement de 12 à 20 %), moyennant quoi la concentration de système de gélification doit être calculée comme suit (quantité de système de gélification)/(quantité de système de gélification + humidité totale),
- de 15 à 30 % (% en poids sur la base de la teneur en eau du concentré, de préférence de 15 à 26 %) de sel, moyennant quoi la concentration de sel doit être calculée comme suit (quantité de sel)/(quantité de sel + humidité totale),
- de 0,5 à 60 % en poids (% en poids sur la base de la composition totale) de composants conférant du goût, en l'absence de 0,5 à 60 % en poids d'herbes, de légumes, de fruits, de viande, de poisson, de crustacés, ou de particules de ceux-ci (% en poids sur la base du concentré conditionné total), et dans lequel le concentré a l'aspect d'un gel.

2. Concentré conditionné selon la revendication 1, dans lequel le concentré a la rhéologie d'un gel.

3. Concentré conditionné selon les revendications 1 et 2, dans lequel le concentré a l'aspect ou la rhéologie d'un gel tel qu'exprimé par un rapport module élastique G' : module visqueux G'' d'au moins 1, de préférence d'au moins 3, plus préférablement d'au moins 5.

4. Concentré conditionné selon les revendications 1 à 3, dans lequel le module visqueux G'' est d'au moins 10 Pa, de préférence d'au moins 50 Pa.

5. Concentré conditionné selon les revendications 1 à 4, dans lequel la gélatine utilisée est de la gélatine à 125-275 Bloom, de préférence de la gélatine de 150-260 Bloom.

6. Concentré selon les revendications 1 à 5, dans lequel l'amidon est de l'amidon naturel.

7. Concentré selon les revendications 1 à 6, dans lequel l'amidon est de l'amidon de pomme de terre ou de l'amidon de maïs.

8. Concentré conditionné selon les revendications 1 à 7, dans lequel les composants de communication de goût comprennent un ou plusieurs extraits ou concentrés liquides ou solubles d'un ou de plusieurs éléments parmi de la viande, du poisson, des herbes, des fruits ou légumes, et/ou des assaisonnements, et/ou des extraits de levure, et/ou une protéine hydrolysée d'origine de légume, de soja, de poisson ou de viande.

9. Concentré conditionné selon les revendications 1 à 8, dans lequel la teneur en humidité totale du concentré est de 40 à 60 % en poids (sur la base du concentré conditionné total).

10. Concentré conditionné selon les revendications 1 à 9, dans lequel le concentré a une activité de l'eau a_{w} de 0,05 à 0,87, de préférence de 0,7 à 0,78.

11. Concentré conditionné selon les revendications 1 à 10, comprenant en outre de 1 à 30 %, de préférence de 1 à 15 % (poids sur la base du concentré conditionné total) de graisse et/ou huile émulsionnée.

12. Concentré conditionné selon les revendications 1 à 11, dans lequel le concentré est conditionné dans une coupelle ou un pot doté d'un joint.

13. Concentré selon les revendications 1 à 12, dans lequel la partie du concentré conditionné est telle que le concentré a un poids (hors conditionnement) de 10 g à 10 kg.

14. Concentré selon les revendications 1 à 13, dans lequel le concentré crée un bouillon, un potage, une soupe, une sauce, une sauce à base de jus de viande en diluant ledit concentré dans un liquide aqueux par application de chaleur, de préférence selon un rapport de 1:15 à 1:50.

15. Concentré selon les revendications 1 à 14, dans lequel 30 g du concentré se dissolvent dans 900 ml d'eau en ébullition en moins de 3 minutes et demie, de préférence en moins de 3 minutes.

16. Concentré selon les revendications 1 à 15, dans lequel le concentré est un bouillon concentré.

17. Concentré selon la revendication 16, dans lequel le bouillon concentré crée un bouillon en diluant ledit bouillon concentré dans un liquide aqueux par application de chaleur, ledit bouillon concentré comprenant :
- de 20 à 80 % d'eau ( % en poids sur la base du concentré conditionné total),
- un système de gélification comprenant la combinaison d'amidon en une quantité de 1 % à 7 % (% en poids sur la base de la teneur en eau du concentré, plus préférablement de 3 à 6 %) et de la gélatine en une quantité de 6 à 20 % (% en poids sur la base de la teneur en eau du concentré, plus préférablement de 12 à 20 %), moyennant quoi la concentration de système de gélification doit être calculée comme suit (quantité de système de gélification)/(quantité de système de gélification + humidité totale),
- de 15 à 30 % (% en poids sur la base de la teneur en eau du concentré, de préférence de 15 à 26 %) de sel, moyennant quoi la concentration de sel doit être calculée comme suit (quantité de sel)/(quantité de sel + humidité totale),
- de 0,5 à 60 % en poids (% en poids sur la base de la composition totale) de composants conférant du goût, en l'absence de 0,5 à 60 % en poids d'herbes, de légumes, de fruits, de viande, de poisson, de crustacés, ou de particules de ceux-ci (% en poids sur la base du concentré conditionné total), et dans lequel le concentré a l'aspect d'un gel, tel qu'exprimé par un rapport module élastique G' : module visqueux G'' d'au moins 1 et la partie du concentré conditionné est telle que le concentré a un poids (hors conditionnement) de 10 g à 10 kg.

18. Concentré selon la revendication 17, comprenant en outre de 1 à 30 %, de préférence de 1 à 15 % (poids sur la base du concentré conditionné total) de graisse et/ou huile émulsionnée.

19. Concentré selon la revendication 17 ou 18, dans lequel le bouillon concentré crée un bouillon en diluant ledit bouillon concentré dans un liquide aqueux par application de chaleur selon un rapport de 1:15 à 1:50.

20. Procédé de préparation d'un concentré pour préparer un bouillon, un potage, une soupe, une sauce, une sauce à base de jus de viande ou pour être utilisé comme assaisonnement, ledit concentré comprenant :
- de 20 à 80 % d'eau ( % en poids sur la base du concentré conditionné total),
- un système de gélification comprenant la combinaison d'amidon en une quantité de 0,1 % à 10 % (% en poids sur la base de la teneur en eau du concentré, de préférence de 1 à 7 %, plus préférablement de 3 à 6 %) et de la gélatine en une quantité de 1,5 à 30 % (% en poids sur la base de la teneur en eau du concentré, de préférence de 6 à 20 %, plus préférablement de 12 à 20 %), moyennant quoi la concentration de système de gélification doit être calculée comme suit (quantité de système de gélification)/(quantité de système de gélification + humidité totale),
- de 15 à 30 % (% en poids sur la base de la teneur en eau du concentré, de préférence de 15 à 26 %) de sel, moyennant quoi la concentration de sel doit être calculée comme suit (quantité de sel)/(quantité de sel + humidité totale),
- de 0,5 à 60 % en poids (% en poids sur la base de la composition totale) de composants conférant du goût, en l'absence de 0,5 à 60 % en poids d'herbes, de légumes, de fruits, de viande, de poisson, de crustacés, ou de particules de ceux-ci (% en poids sur la base du concentré conditionné total), et dans lequel le concentré a l'aspect d'un gel, le processus comprenant les étapes consistant à mélanger tous les ingrédients, à verser le mélange dans le conditionnement ou des moules, à fermer le conditionnement, moyennant quoi une étape de chauffage est appliquée avant et/ou pendant et/ou après le remplissage du conditionnement ou des moules.

21. Processus selon la revendication 20, dans lequel au moins une partie de l'étape de chauffage se fait à une température d'au moins 70°C.

22. Utilisation d'un concentré selon la revendication 1 à 19, pour préparer un bouillon, un potage, une soupe, une sauce, une sauce à base de jus de viande ou pour être utilisé comme assaisonnement.

23. Utilisation selon la revendication 22, dans laquelle le concentré est un bouillon concentré et crée un bouillon en diluant ledit bouillon concentré dans un liquide aqueux par application de chaleur, ledit bouillon concentré comprenant :
- de 20 à 80 % d'eau ( % en poids sur la base du concentré conditionné total),
- un système de gélification comprenant la combinaison d'amidon en une quantité de 1 % à 7 % (% en poids sur la base de la teneur en eau du concentré, plus préférablement de 3 à 6 %) et de la gélatine en une quantité de 6 à 20 % (% en poids sur la base de la teneur en eau du concentré, plus préférablement de 12 à 20 %), moyennant quoi la concentration de système de gélification doit être calculée comme suit (quantité de système de gélification)/(quantité de système de gélification + humidité totale),
- de 15 à 30 % (% en poids sur la base de la teneur en eau du concentré, de préférence de 15 à 26 %) de sel, moyennant quoi la concentration de sel doit être calculée comme suit (quantité de sel)/(quantité de sel + humidité totale),
- de 0,5 à 60 % en poids (% en poids sur la base de la composition totale) de composants conférant du goût, en l'absence de 0,5 à 60 % en poids d'herbes, de légumes, de fruits, de viande, de poisson, de crustacés, ou de particules de ceux-ci (% en poids sur la base du concentré conditionné total), et dans lequel le concentré a l'aspect d'un gel, tel qu'exprimé par un rapport module élastique G' : module visqueux G'' d'au moins 1
et dans laquelle la partie du concentré conditionné est telle que le concentré a un poids (hors conditionnement) de 10 g à 250 kg.

24. Utilisation selon la revendication 23, dans laquelle le bouillon concentré comprend en outre de 1 à 30 %, de préférence de 1 à 15 % (poids sur la base du concentré conditionné total) de graisse et/ou huile émulsionnée.

25. Utilisation selon la revendication 23 ou 24, dans laquelle le bouillon concentré crée un bouillon en diluant ledit bouillon concentré dans un liquide aqueux par application de chaleur selon un rapport de 1:15 à 1:50.

26. Procédé de préparation d'un bouillon comprenant l'étape consistant à diluer un concentré selon l'une quelconque des revendications 1 à 19, moyennant quoi ledit concentré est dilué dans un liquide aqueux par application de chaleur.

27. Procédé selon la revendication 26, moyennant quoi ledit concentré est dilué selon un rapport de 1:15 à 1:50.
